# EUROPEAN PATENT SPECIFICATION

(11) **EP 2 683 657 B1**
(45) Date of publication and mention of the grant of the patent: **16.09.2020**
(21) Application number: 12707619.8
(22) Date of filing: 09.03.2012
(51) Int. Cl.: C02F 1/00, E03C 1/04, C02F 9/00, B05B 1/18

(54) **PLUMBING FIXTURE**
SANITÄRVORRICHTUNG
ACCESSOIRE DE PLOMBERIE

(30) Priority: 10.03.2011 EP 11157668
(43) Date of publication of application: 15.01.2014
(73) Proprietor: Johs. Tandrup Metalvarefabrik APS, 3450 Alleroed (DK)
(72) Inventor: TANDRUP, Andreas, DK-3450 Allerød (DK)
(74) Representative: Budde Schou A/S
(86) International application number: PCT/EP2012/054119
(87) International publication number: WO 2012/120116

(56) References cited:
- EP-A1- 0 549 341
- DE-A1- 10 140 081
- DE-U1-202008 009 583
- GB-A- 992 139
- JP-A- 10 077 667
- JP-A- 2004 003 320
- US-A- 6 145 670
- US-A1- 2005 127 004
- US-B1- 6 464 869

## Description

Water in pipes in plumbing systems, for example in a residence, an apartment building, an office or other building, may become unsuitable for consumption or use by a user of the water, such as an inhabitant of the building or office. For example scale or rust formed in the pipes may become suspended by the water which may lead to discoloration of the water, rendering the water less attractive to use. A greater problem, however, is that harmful bacteria growing on the inside of the pipes may release from the pipes to be suspended by the water, potentially causing disease among the users of the water.

Although water pipes may be cleaned, for example by flushing, such cleaning is often inefficient as bacteria in the water typically grow to form a biofilm adhering strongly to, and covering large areas of, the pipe interior.
Harmful pathogens within the biofilm include bacteria of the *Legionella* genus which cause Legionellosis in the form of pneumonia (Legionnaires' disease) and other respiratory illnesses (Pontiac fever). The bacteria *Legionella pneumophila* is responsible for over 90% of the Legionellosis cases, and 90% of the Legionella bacteria in the pipe is found within the biofilm.
The typical route of infection is aerosols of water containing the bacteria.
Due to the relatively high mortality of Legionellosis, 5-30%, and the bacteria's preferred aquatic environment at temperatures of 25 to 45 °C, it is of importance that water for use in showering, bathing, drinking etc., should be kept free of bacteria, especially bacteria of the *Legionella* genus.
Other contaminants in the water include the parasites *Giardia lamblia* and *Cryptosporidum* and the bacteria *Mycobacterium Avium.*

It is known to use filters fitted to water pipes or plumbing fixtures, such as shower equipment, including shower heads, for preventing exposure of persons using the water to any bacteria present in the water. References include amongst others EP0549341A1 EP1747811B1, EP1166703B1, EP1678381B1, EP1370345B1, DE3918468A1, DE1040081A1, DE202006014958U1, DE202008009583U1, and DE202004004153U1, GB992139A, JP10077667A, JP2004003320A, US2005/127004A1 AND US6464869B1.

From US6145670, a bathtub spout is known having a conical housing serving to receive a conically shaped filter body, which is fixated at the front end of the bathtub spout by means of cooperating threads, the filter body having an outer thread and the bathtub spout having an inner concealed thread within the bathtub spout juxtaposed the outlet of the bathtub spout. At its opposite end, the filter body is provided with an outer thread for cooperating with a conventional water plumbing's fitting.

Although the above referenced techniques may provide effective filtration and retention of bacteria, they do not provide protection against removal of the filter, whereby their effectiveness is lost. As an example, a filter after extended use may become clogged, thus resulting in a lessened flow of water through the filter. The filter thus has to be cleaned or replaced to restore the water flow. However, due to financial restrains, or inability to find a correct replacement filter, it is not uncommon that a user of the plumbing fixture simply removes the filter in order to restore the flow of water to allow the plumbing fixture to be used further. Alternatively, where a replacement filter is procured by the user, the replacement filter may be an incorrect one or may be installed incorrectly by the user. Furthermore, during the assembly of the plumbing fixture, such as when a building is erected, it may occur that the filter, by neglect or choice, is omitted.

In the above described cases, the loss of the filter renders the plumbing fixture ineffective in preventing exposure to any bacteria present in the water. Further, it can be difficult for a casual user of the plumbing fixture to determine if there is a filter in the plumbing fixture or not.

It is an object of the present invention to increase the security in a plumbing fixture having a filter.

It is a further object of the present invention to provide a plumbing fixture having a filter where the plumbing fixture is prevented from being used without the filter.

It is yet a further object of the present invention to provide a plumbing fixture where the presence of a filter is easily determined.

These objects, as well as numerous additional objects which will be evident from the below description of embodiments of the water installation according to present invention, are according to a first aspect of the present invention achieved by a plumbing fixture comprising:
a water delivery part comprising a first housing part having a water outlet and a hollow interior channel communicating with the water outlet and defining an open inlet opposite to the water outlet, the first housing part further having a first connector,
a filter cartridge comprising a second housing part having a hollow and generally elongated, preferably cylindrical shape, the second housing part having a first end and an opposite second end and being positionable in an at least partial insertion in the hollow interior channel through the open inlet exposing the first end outside the first housing part and positioning the second end in communication with the water outlet, the first end defining an inlet connector connectable to a source of water through a plumbing fitting and establishing communication from the source of water into the second housing part, the second housing part further having a second connector, the filter cartridge further comprising a capillary filter interposed and concealed within the second housing part between the first end and the second end, said second end of said second housing part being sealed by a mesh element being integrally and non-disconnectably sealed to said second housing part and
the second connector being engageable and lockable with the first connector for retaining the second housing part in the at least partial insertion, the first connector being non-connectable to the plumbing fitting.

The pressure of the mesh element at the second of the second housing parts is advantageous, as the mesh element prevents access to the interior of the second housing part and the capillary filter, thus hindering the user from removing the filter and thus circumventing the filter.

The plumbing fixture may be made from plastics such as polycarbonate, ABS etc., composite materials or metals such as steel, stainless steel, brass etc. Different materials may be used for the first housing part and the second housing part.

The mesh element may comprise a mesh, a grating, a net, parallel bars, cross bars, joined concentric or juxtaposed rings, a plurality of small apertures, etc. The mesh element may be sealed to the second housing part by moulding, adhesive, welding, or by heating the mesh element and embedding it in the second end of the housing part. The mesh element may be made of the same material as the second housing part or may be made from a different material.

In the context of the present invention, the term non-disconnectable is to be understood as also comprising the situation where the element referred to cannot be removed without destroying or damaging the mesh element and/or the second housing part, unless special tools or devices are used. Thus, it is contemplated within the context of the present invention that a refurbishable filter cartridge may be provided, whereby the capillary filter could be professionally replaced or cleaned whereafter the filter cartridge could be resold as a refurbished filter cartridge. For this purpose, the mesh element could be sealed to the second end of the second housing part by screws having non-conventional screw heads or the like, thus preventing the general public or the typical user of the plumbing fixture from opening the filter cartridge.

The water delivery part may comprise the handle and the head of a handheld shower head, the head of a wall mounted shower head, or the handle and the head of a pre-rinse spray unit etc. Thus, the first housing part may be integral with the water delivery part.

For a tap, the first housing part may be the tap, or alternatively the first housing part may be connected to the tap via a connection line, in which case it is preferred that the connections between the connection line and the water outlet of the first housing part at one end, and the connection between the connection line and the tap at the other end, are made by crimping, moulding, or by the connection line being integral with the first housing part and the tap respectively. This makes it difficult for a user of the plumbing fixture to remove the first housing part or the connection line for directly connecting the tap to a source of water, thereby bypassing the first housing part and the filter cartridge.

The first housing part may comprise a one-way valve interposed between the hollow interior channel and the water outlet to prevent filtered water from flowing back through the filter cartridge.

The water outlet may comprise a plurality of nozzles or apertures such as in a handheld or wall mounted shower head, or may alternatively comprise a single aperture.

The hollow interior channel may extend through all or a portion of the first housing part. Where the interior channel extends through a portion of the first housing part a conduit or a further channel may be provided to establish the communication to the water outlet
The walls of the hollow interior channel may be coated by an antimicrobial coating to further limit bacteria in the plumbing fixture.

In the context of the present invention, the term communicating is to be understood as also comprising the situation where the elements referred to are arranged so that water may pass from one of the elements to the other of the elements and vice versa.

The open inlet is preferably smooth and devoid of any structure which may assist a user in circumventing using a filter cartridge in the plumbing fixture by connecting a pipe or hose having conventional plumbing fittings directly to the first housing part.

In the context of the present invention, the term opposite is to be understood as also comprising positions in regard of a flow of water, as exemplified by a position upstream being opposite to a position downstream.

The filter cartridge is preferably a disposable single use unit.

The second housing part is preferably made from a strong material to prevent tampering and removal of the filter from the filter cartridge. It is thus contemplated within the context of the present invention that the second housing part could be made from metal, however it is preferred that the cartridge body is made from plastics as this is less expensive.

In the context of the present invention the term hollow is to be understood as also comprising the situation where the element referred to comprises an interior space for receiving or containing a further element.

In the context of the present invention, the term elongated is to be understood as the situation where the length of the element referred to is at least 1.5 times its width.

The second end, opposite the first end, is preferably opposite to the first end in a positional sense, however it may also, as the term opposite is discussed above, be opposite in the sense of a flow of water, i.e. downstream of the first end. Thus the second end may also be provided as a radial aperture in the second housing part. The second end may comprise a plurality of apertures provided, the size of each aperture being small so that the capillary filter cannot be manipulated through the apertures.

The at least partial insertion in the hollow interior channel may comprise a full insertion in the hollow interior channel. A full insertion in the hollow interior channel may be preferable as it further protects the filter cartridge from manipulation and damage, and/or reduces the size of the plumbing fixture.

In the context of the present invention, the term outside is to be understood as also comprising the situation where the element referred to is within another element, as long as the element referred to is accessible by a further element.

The inlet connector preferably comprises a short pipe having one end connected to the second housing part and the other end having an outer screw thread or a hose barb connectable to the plumbing fitting.
The inlet connector may comprise a grating or screen to prevent access to the filter through the inlet connector while allowing water to enter the filter cartridge. The screen or grating may be integral with the inlet connector or may be attached to the inlet connector.
The screen and grating may also perform the function of preventing entry of dust or sand into the filter cartridge.
The inlet connector may further comprise a one-way valve to prevent water which has entered the second housing part but which has not yet, or has only partly been filtered, from flowing back to the source of water.

In the context of the present invention, the term connectable is to be understood as also comprising a state wherein the elements referred to can be effectively connected with regard to water tightness.

The source of water may be mains water or rain water from a reservoir and the water may be heated in a water heater or cooled in a water cooler prior to use by the user of the plumbing fixture.

The plumbing fitting may have a dimension such as 1/4, 3/8, 1/2 or 3/4 inch and may be male for connection with a female inlet connector, or may be female for connection with a male inlet connector. Alternatively, the inlet connector and the plumbing fitting may be both male or female, whereby a coupling piece having two female or male ends may be interposed between the plumbing fitting and the inlet connector.

This capillary filter is advantageous as a capillary filter has a large filter area, thus allowing a larger flow through the capillary filter.
The capillary filter may thus comprise a plurality of capillaries through which the water is led, whereby the permeate, i.e. the filtered water, passes through the pores in the walls of the capillaries and the bacteria or other contaminants remain within the capillaries, the permeate then being led to the second end.
Alternatively, the water to be filtered may be fed into the space between the capillaries and the permeate passing through the walls of the capillaries into the capillaries wherefrom the permeate is led to the second end.

In the context of the present invention, the term interposed is to be understood as also comprising a position in regard of a flow of water, as exemplified by a position between an upstream and a downstream element.

In the context of the present invention, the term between is to be understood as also comprising a position in regard of a flow of water, as exemplified by a position between an upstream and a downstream element.

In the context of the present invention, the term concealed is to be understood as also comprising situations where the element referred to is visible to the user of the plumbing fixture, the element however being protected from access by the user.

In the context of the present invention, the term outside is to be understood as also comprising the situation where the element referred to is within another element, as long as the element referred to is accessible by a further element.

In the context of the present invention, the term lockable is to be understood as also comprising a state wherein the elements referred to do not spontaneously disengage. In the context of the present invention, the term non-connectable is to be understood as also comprising a state wherein the elements referred to cannot be effectively connected with regard to water tightness.

Depending on the functioning of the first and second connectors the second housing part may be non-rotatable or rotatable when positioned in the at least partial insertion.

Thus, the plumbing fixture according to the first aspect of the present invention on one hand is easy to connect to the plumbing fitting and the source of water as long as the filter cartridge with its inlet connector is used, and on the other hand very difficult to connect to the plumbing fitting and the source of water if the filter cartridge is not used. This results in a higher security for the user of the plumbing fixture.

In some embodiments of the plumbing fixture according to the first aspect of the present invention, the plumbing fixture is selected from the group comprising a handheld shower head, a wall mounted shower head, a pre-rinse spray unit, and a tap.
This is advantageous as these plumbing fixtures to some extent may form aerosols during use, thus benefiting from the filtration by the filter cartridge.

A handheld shower head may be temporarily mounted on a support attached to a wall by the user of the handheld shower head.

A wall mounted shower head may be mounted on a pipe extending from a wall, or it may be mounted on a pipe extending from a ceiling. Further, a wall mounted shower head may be mounted on a pipe extending from the floor and forming a bend at a height suitable for directing water towards the user of the wall mounted shower head.

A pre-rinse spray unit is typically supported above a sink for pre-rinsing objects to be subsequently washed in a dishwasher. A pre-rinse spray unit may comprise a valve actuatable by the user of the pre-rinse spray unit for selectively discharging water from the pre-rinse spray unit.

If the plumbing fixture is a mixer tap, i.e. a tap receiving both hot and cold water, it preferably comprises a further hollow interior channel communicating with the water outlet so that two filter cartridges may be used to filter both the hot water and the cold water to prevent both bacteria, which typically thrive in hot water, and parasites and other contaminants which may be present in cold water, from being delivered to the user of the plumbing fixture.

It is however contemplated within the context of the present invention that a plumbing fixture, such as a mixer tap which is connected to sources of hot and cold water, may comprise one hollow interior channel with a corresponding filter cartridge for filtering only one of the hot and the cold waters, and whereby the water which is not filtered is provided to the mixer tap via a further connector comprised by the first housing part. Selecting which water should be filtered depends on which water, the hot or the cold, comprises the contaminants.

In some embodiments of the plumbing fixture according to the first aspect of the present invention, the capillary filter has a pore size of 0.2 µm or less.
This is advantageous as this pore size effectively retains bacteria of the *Legionella* genus. An exemplary pore size less than 0.2 µm is 0.15 µm.
Smaller pore sizes, such as less than 0.15 µm or as low as 0.02 µm or lesser, may be employed for stronger retention of bacteria or contaminants. Pore sizes of 0.02 µm or lesser may also retain viruses.
The filter cartridge may comprise a pre-filter, having larger pores, to protect the capillary filter, having smaller pores, from large contaminants in the water. The pre-filter may be a capillary filter or a disc filter etc.

In accordance with the preferred embodiment of the plumbing fixture according to the first aspect of the present invention, the first connector is provided within the hollow interior channel and the second connector is provided on the second housing part. This is advantageous as it protects the first connector from manipulation.

In accordance with the preferred embodiment of the plumbing fixture according to the first aspect of the present invention, the first connector comprises a first groove and the second connector comprises a first sealing ring.
This is advantageous as it provides a simple and efficient way of retaining the second housing part in the at least partial insertion.
In the at least partial insertion the sealing ring is positioned in the groove.
Further, the groove may be provided in a restriction in the hollow interior channel whereby the sealing ring in the at least partial insertion has been forced at least partly through the restriction to be positioned in the groove.

The sealing ring may be integrally formed with the second housing part of the same material as the second housing part, or may alternatively be of a different material. The sealing ring may be integrally formed with the second housing part by moulding. The sealing ring may also be separate from the second housing part. Suitable materials for the sealing ring include rubber and plastics. Where the sealing ring is separate from the second housing part the second housing part may contain a groove for retaining the sealing ring on the second housing part.

Further in accordance with the preferred embodiment of the plumbing fixture according to the first aspect of the present invention, the first connector further comprises a second groove and the second connector further comprises a second sealing ring.
This is advantageous as it more strongly retains the second housing part in the channel and decreases the risk of water leaking out of the open inlet between the wall of the hollow interior channel and the second housing part.

A protrusion may be used as AN alternative to the groove as the first connector. In this case, the sealing ring has been forced into the hollow interior channel past the protrusion when the second housing part is in the at least partial insertion, whereby the engagement of the protrusion and the sealing ring retains the second housing part in the at least partial insertion.

In an alternative embodiment of the plumbing fixture according to the first aspect of the present invention, the first connector comprises an interior screw thread of a first mesh, the second connector comprises an exterior screw thread of a second mesh, and the first and second meshes are identical.
This is advantageous as a screw thread is capable of retaining the second housing part strongly in the at least partial insertion.
The interior and outer screw threads are preferably of a non-conventional mesh, pitch, number of starts and/or dimensions. By non-conventional is meant the elements referred to are not the ones commonly used for plumbing fixtures, thus the user cannot readily find a fitting nipple or plumbing fitting for use in attaching a source of water directly to the water delivery part and thus bypassing the filter cartridge.

Alternatively, the first connector and the second connector may be comprised by a bayonet coupling. In the bayonet coupling the first connector may for example comprise a groove in the wall of the hollow interior channel, and the second connector may comprise a corresponding pin for engaging the groove to retain the second housing part in the at least partial insertion. The groove may include a first portion and a second portion, the second portion being substantially perpendicular to the longitudinal axis of the hollow interior channel. During the positioning of the second housing part in the at least partial insertion, the pin initially engages the first portion until the second housing part is positioned in the at least partial insertion. At this time, the second housing part is rotated so that the pin enters the second portion, whereby the engagement between the pin and the second portion of the groove retains the second housing part in the at least partial insertion. The reversed arrangement, i.e. the first connector comprising the pin and the second connector comprising the groove, is also possible.

In another alternative the first connector and the second connector may be comprised by a snap fit connection. In the snap fit connection, the first connector may comprise a groove in the wall of the hollow interior channel and the second connector may comprise a resilient cantilever having a hook for engaging the groove to retain the second housing part in the at least partial insertion. During the positioning of the second housing part in the at least partial insertion, the cantilever is initially resiliently biased until the second housing part is positioned in the at least partial insertion whereby the cantilever assumes its non-biased state whereby the hook engages the groove. To release the snap fit connection, the first housing part may comprise an opening for allowing a thin object to force the hook or the cantilever so that the hook disengages the groove, alternatively the sides of the groove may be angled so that the hook may disengage when sufficient force is applied to the second housing part in the direction of removing the second housing part from the at least partial insertion. The reversed arrangement, i.e. the first connector comprising the resilient cantilever and the second connector comprising the groove, is also possible.

Further possible first and second connectors include a first connector in the form of a screw through the wall of the first housing part and the second connector including a corresponding threaded aperture in the second housing part, etc.

Furthermore, first and second connectors may be similar to what is described in WO9749496. Thus, the first connector may be locking slider positionable in the first housing part, the second connector may be an annular groove provided on the second housing part, the locking slider in a first position engaging the walls of the grove to retain the second housing part in the at least partial insertion, and the locking slider in a second position not engaging the walls of the groove.

In some embodiments of the plumbing fixture according to the first aspect of the present invention, the at least partial insertion is established in a loose fit by the second housing part in the hollow interior channel of the first housing part.

By a loose fit is meant a fit which allows the second housing part to be readily inserted into the hollow interior channel. This is advantageous as it allows the second housing part to be easily positioned in the at least partial insertion.

In some embodiments of the plumbing fixture according to the first aspect of the present invention, the hollow interior channel of the first housing part has an inner cross section profile selected from the group comprising circular, semi-circular, triangular, square, hexagonal, polygonal, and star-shaped.
A circular inner cross section profile is advantageous as it is simple to manufacture and may allow the filter second housing part to be rotated within the hollow interior channel.
A semi-circular, triangular, square, hexagonal, polygonal, and star-shaped inner cross section profile is advantageous as it provides possibilities for ensuring that the plumbing fixture cannot be used without the filter cartridge, and that an incorrect filter cartridge having an incorrect outer cross section profile, cannot be used with the plumbing fixture.
If a hose, which generally is circular in cross section, is forced into the hollow interior channel the space between the wall of the hollow interior channel and the hose will lead to water leaking out of the open inlet part, thus clearly indicating that the plumbing fixture is incorrectly assembled.

In some embodiments of the plumbing fixture according to the first aspect of the present invention, the hollow interior channel comprises an inwardly projecting protrusion, the second housing part comprising a groove, and the groove is enterable by said protrusion.
The protrusion also comprises a rail.
This is advantageous as it provides further possibilities for ensuring that the plumbing fixture cannot be used without the filter cartridge, and that an incorrect filter, having no groove, cannot be used with the plumbing fixture.
A plurality of protrusions and grooves, each corresponding protrusion and groove set at a specific position in the hollow interior channel and on the second housing part may be used to provide multiple identities such that the filter cartridge can be keyed to the water delivery part.
Thus, a specific plumbing fixture for a hospital, or other area where a very high protecting against bacteria and also viruses is desired, may be keyed to a filter cartridge of a type comprising a capillary filter having a pore size effective for also retaining viruses.
On the other hand, a filter cartridge having a capillary filter having larger pores and thus only retaining bacteria, such as a filter cartridge for use in a home or other area where retention of viruses may not be needed, may have a different key, i.e. configuration of grooves, so that it is non-compatible with plumbing fixture at the hospital.
The keys of the filter cartridges may be configured so that the filter cartridge comprising the capillary filter with the smaller pores may be used both in the plumbing fixture at the hospital and in the plumbing fixture in the home, while the filter cartridge having the capillary filter with the larger pores may be used only in the plumbing fixture in the home.

In some embodiments of the plumbing fixture according to the first aspect of the present invention, the hollow interior channel comprises an axial spear, the filter cartridge comprises an axial bore, and the axial bore is adapted to receive the spear.
This is advantageous as it provides further possibilities for ensuring that the plumbing fixture cannot be used without the filter cartridge, and that an incorrect filter, having no bore, cannot be used with the plumbing fixture.
As discussed above, a plurality of axial spears and axial bores in specific configurations may be used to provide multiple identities such that the filter cartridge can be keyed to the water delivery part.

In some embodiments of the plumbing fixture according to the first aspect of the present invention the second connector is positioned at the first end of the second housing part and the first connector is positioned at the open inlet of the first housing part defining a first set of positions, and/or
the second connector is positioned at the second end of the second housing part and the first connector is positioned adjacent the water outlet of the first housing part defining a second set of positions, and/or
the first and second connectors are positioned in a third set of positions in intermediate positions in relation to the first and second sets of positions.

The first set of positions is advantageous as it is easy to manufacture and/or that it simplifies the positioning of the second housing part when the first connector comprises an interior screw thread of a first mesh, the second connector comprises an exterior screw thread of a second mesh, and the first and second meshes are identical.

The second set of positions is advantageous as it protects the first connector from manipulation by the user.
The third set of positions is advantageous as it provides some protection of the first connector from manipulation by the user.

In some embodiments of the plumbing fixture according to the first aspect of the present invention, the first housing part comprises a window into the hollow interior channel, and the second housing part comprises indicia adapted to be viewable through the window when the second housing part is retained in said partial insertion.
This is advantageous as it allows the user to easily assess the presence of a correct filter cartridge in the plumbing fixture.

In a second aspect of the present invention, a method of preventing the supply of water from a source of water from a plumbing fixture without filtering bacteria from the water is provided, the method comprising:
providing a water delivery part comprising a first housing part having a water outlet and a hollow interior channel communicating with the water outlet and defining an open inlet opposite to the water outlet, the first housing part further having a first connector,
providing a filter cartridge comprising a second housing part having a hollow and generally elongated, preferably cylindrical shape, the second housing part having a first end and an opposite second end and being positionable in an at least partial insertion in the hollow interior channel through the open inlet exposing the first end outside the first housing part and positioning the second end in communication with the water outlet, the first end defining an inlet connector connectable to a source of water through a plumbing fitting and establishing communication from the source of water into the second housing part, the second housing part further having a second connector, the filter cartridge further comprising a capillary filter interposed and concealed within the second housing part between the first end and the second end, said second end of said second housing part being sealed by a mesh element being integrally and non-disconnectably sealed to said second housing part, and the second connector being engageable and lockable with the first connector for retaining the second housing part in the at least partial insertion, the first connector being non-connectable to the plumbing fitting,
positioning the second housing part in the at least partial insertion in the hollow interior channel and positioning the second end of the second housing part in communication with the water outlet,
engaging and locking the first connector to the second connector and retaining the second housing part in the at least partial insertion, and
connecting the inlet connector to the source of water through the plumbing fitting and establishing communication from the source of water into the second housing part.

The invention and its many advantages will be described in more detail below with reference to the accompanying schematic drawings, which for the purpose of illustration show some non-limiting embodiments, and in which
Fig. 1 shows, in a perspective and exploded view, a first embodiment of a plumbing fixture according to the first aspect of the present invention,
Fig. 2 shows, in a side view, the first embodiment of the plumbing fixture according to the first aspect of the present invention in assembled state,
Fig. 3 shows, in a side and exploded view, a second embodiment of a plumbing fixture according to the first aspect of the present invention,
Fig. 4 shows, in a side and exploded view, a third embodiment of a plumbing fixture according to the first aspect of the present invention, and,
Fig. 5 shows, in a side and exploded view, a fourth embodiment of a plumbing fixture according to the first aspect of the present invention.

In the below description, one or more subscript Arabic numerals added to a reference number indicates that the element referred to is a further one of the element designated the un-subscripted reference number.

Further, one or more signs added to a reference number indicates that the element referred to has the same or similar function as the element designated the un-subscripted reference number, however, differing in structure.

When further embodiments of the plumbing fixture are shown in the figures, the elements which are new, in relation to earlier shown embodiments, have new reference numbers, while elements previously shown are referenced as stated above.

Elements which are identical in the different embodiments have been given the same reference numerals and no further explanations of these elements will be given.

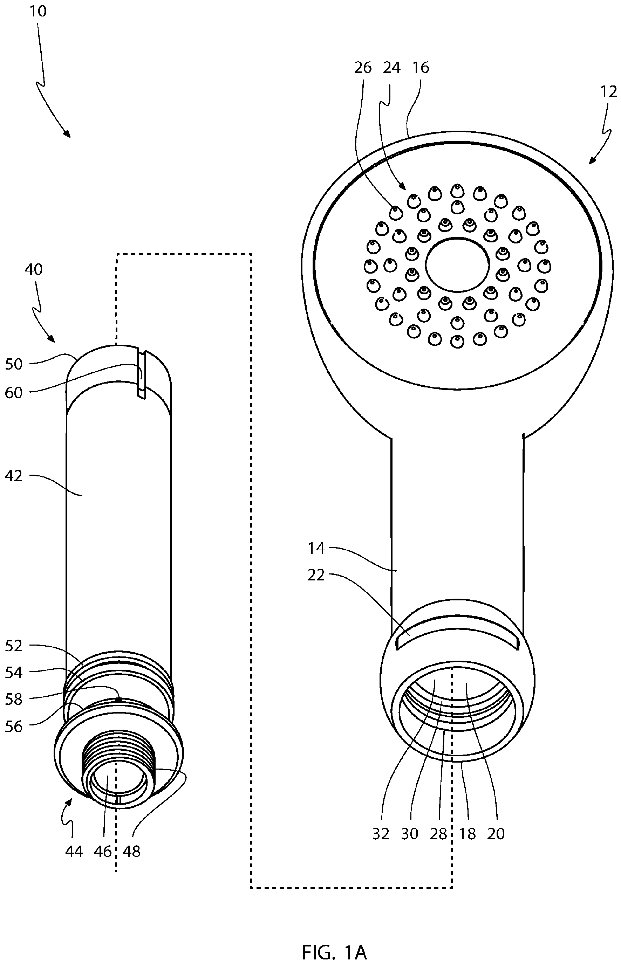

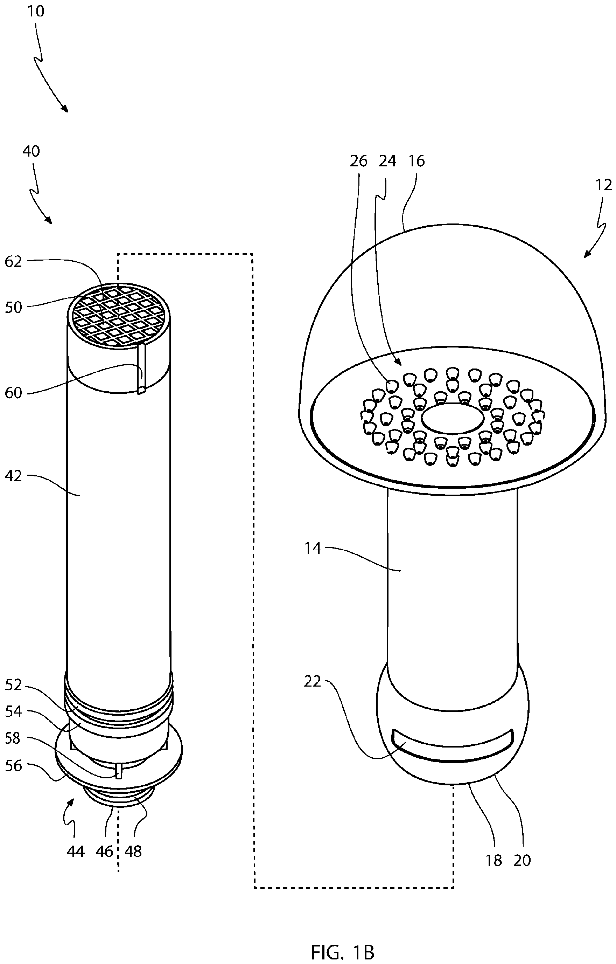

Figs. 1A and 1B show in a perspective and exploded view, a first embodiment of a plumbing fixture, in its entirety designated the reference numeral 10, according to the first aspect of the present invention. The plumbing fixture 10 comprises a water delivery part in the form of a handheld shower head, in its entirety designated the reference numeral 12, comprising a first housing part in the form of a handle part, designated the reference numeral 14 and a head part designated the reference numeral 16. One end, designated the reference numeral 18, of the handle part 14 comprises an open inlet, designated the reference numeral 20, and an indicia receiving groove designated the reference numeral 22. The head part 16 comprises a water outlet, in its entirety designated the reference numeral 24, comprising a plurality of nozzles, one of which is designated the reference numeral 26.

The handheld shower head 12 further comprises, best viewed in fig 1A, a first connector in the form of first and second grooves designated the reference numerals 28 and 30 respectively, provided within a hollow interior channel designated the reference numeral 32, communicating with the water outlet 24 through the handle part 14.

The plumbing fixture 10 further comprises a filter cartridge, in its entirety designated the reference numeral 40, comprising a generally elongated and cylindrical second housing part, designated the reference numeral 42, enclosing a capillary filter, not shown. The second housing part 42 further comprises an inlet connector, in its entirety designated the reference numeral 44, comprising an inlet, designated the reference numeral 46, and a screw thread designated the reference numeral 48, the screw thread 48 being of the conventional dimensions used to connect a shower head or other plumbing fixture to a source of water via a pipe or hose. Opposite the inlet connector 44, a second end designated the reference numeral 50 is provided for allowing water entering the filter cartridge 40 through the inlet connector 44 to exit the filter cartridge 40 after the water has been filtered by the filter within the second housing part 42.

The second housing part further comprises first and second sealing rings, designated the reference numerals 52 and 54, respectively. A flange designated the reference numeral 56 is provided between the inlet connector 44 and the second housing part 42, and is fastened to the second housing part 42 by webs, one of which is designated the reference numeral 58.

The filter cartridge 40 further comprises an axial groove designated the reference numeral 60, which is adapted to engage with a corresponding rail (not shown) provided in the hollow interior channel 32, to ensure that only a correct filter cartridge, i.e. the filter cartridge 40 having the groove 60, may be used in the plumbing fixture 10.

As best shown in fig. 1B, an optional mesh element in the form of a grating, designated the reference numeral 62, may be provided at the second end 50 to further prevent access to the capillary filter, which is enclosed within the second housing part 42, while allowing filtered water to exit the second housing part 42.

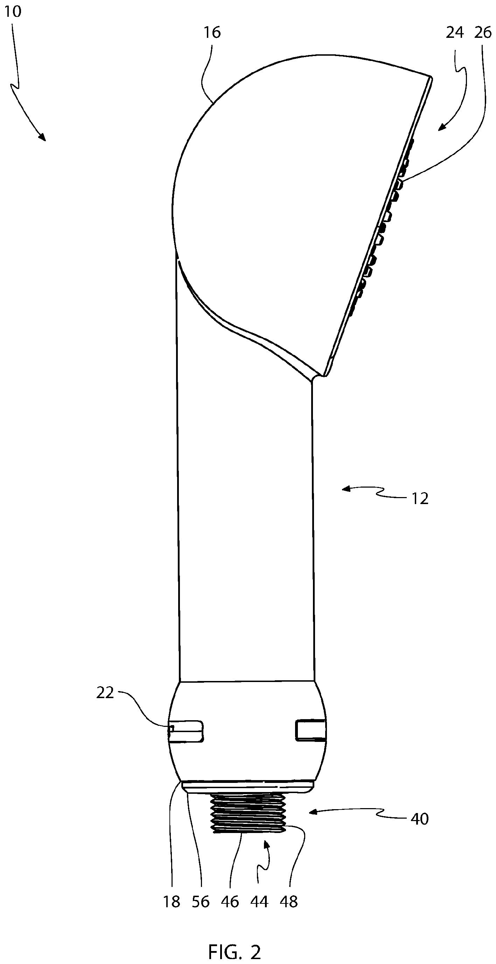

Fig. 2 shows in a side view the first embodiment of the plumbing fixture 10 according to the first aspect of the present invention in assembled state.
The plumbing fixture 10 has been assembled by positioning the second housing part 42 of the filter cartridge 40 in insertion in the hollow interior channel 32 of the handle part 14 of the handheld shower head 12. The second housing part 42 is retained in the insertion within the hollow interior channel 32 by the engaging and locking of the sealing rings 52 and 54 with the respective first and second grooves 28 and 30. The flange 56 abuts the connection part 18 and the screw thread 48 of the exposed inlet connector 44 provides for connecting the plumbing fixture 10 to a source of water, via for example a plumbing fitting on a pipe or hose.

As can be seen from figs. 1-2, there is no risk of using the plumbing fixture without the filter cartridge, as the inlet connector 44 is provided on the filter cartridge 40, and as the first and second grooves 28 and 30 are non-connectable to a plumbing fitting. Thus, the filter cartridge 40 is necessary for connecting the plumbing fixture 10 to a source of water. This increases the security for the user of the plumbing fixture. Further, it is easy to detect that the filter is installed in the plumbing fixture 10. The axial groove 60 prevents other, possibly non-suitable filters lacking the axial groove 60, from being used.

The handheld shower head 12 and the second housing part of the filter cartridge are both made from moulded plastic. The sealing rings 52 and 54 are made from rubber or equivalent. The inlet connector 40 is made from plastic or metal.

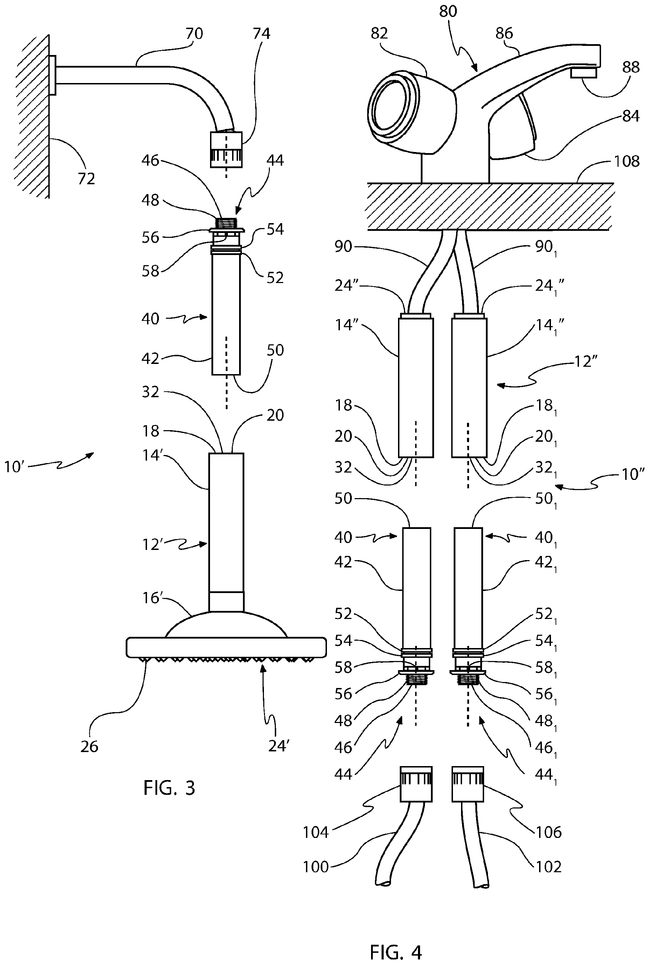

Fig. 3 shows in a side view a second embodiment of a plumbing fixture designated the reference numeral 10', according to the first aspect of the present invention. The plumbing fixture 10' differs from the plumbing fixture 10 in that the handheld shower head 12 has been substituted by a wall mounted shower head, in its entirety designated the reference numeral 12', which may, as shown in fig. 3, be mounted to a water pipe, designated the reference numeral 70, extending from a wall, designated the reference numeral 72. The water pipe 70 terminates in a connector, designated the reference numeral 74, which comprises an interior thread complimentary to the screw thread 48 of the filter cartridge 40.
A modified handle part, designated the reference numeral 14', connects to a modified head part designated the reference numeral 16', in parallel with the direction of the nozzles 26 provided on a modified water outlet designated the reference numeral 24', which has a larger diameter than the water outlet 24.
As with plumbing fixture 10 shown in figs. 1-2, the plumbing fixture 10' is assembled by inserting the second housing part 42 of the filter cartridge 40 into the modified handle part 14', whereby the sealing rings 52 and 54 engage and lock with the first and second grooves 28 and 30 provided within the hollow interior channel 32 within the handle part 14'. The filter cartridge 40 may be connected to the coupling 74 prior to, or after, the insertion of the filter cartridge 40 into the channel 32.
As seen in fig. 3, the plumbing fixture 10' cannot be used without the filter cartridge 40, thus increasing the security for the user of the plumbing fixture 10'.
The indicia receiving groove 22 may be provided on the modified handle part 14'.
The wall mounted shower head 12' is made from moulded plastic or metal.

Fig. 4 shows in a side view a third embodiment of a plumbing fixture, designated the reference numeral 10", according to the first aspect of the present invention.
The plumbing fixture 10" differs from the plumbing fixture 10 in that the handheld shower head 12 has been substituted by a tap assembly 12" having two modified handle parts 14" and 14"₁ which are connected to a mixer tap, in its entirety designated the reference numeral 80, and in that two filter cartridges 40 and 40₁ are used. The mixer tap 80 comprises first and second levers, designated the reference numerals 82 and 84, respectively for adjusting the flow of hot and cold water through the mixer tap 80 and into the spout 86 to the spout outlet 88.
The hot and cold water is provided through first and second connection lines, designated the reference numerals 90 and 90₁, respectively. The first connection hose 90 is connected to a modified water outlet 24" of the modified handle part 14" by welding or moulding, and the second connection hose 90₁ is connected to a modified water outlet 24"₁ of the modified handle part 14"₁ by welding or moulding.

Hot water is supplied from a source of hot water through a hot water pipe designated the reference numeral 100, and cold water is supplied from a source of cold water through a cold water pipe, designated the reference numeral 102. The hot water pipe 100 is terminated in a first connector designated the reference numeral 104, and the cold water pipe 102 is terminated in a second connector 106. The connectors 104 and 106 each comprises an interior thread complimentary to the screw threads 48, 48₁ of the filter cartridges 40, 40₁ for connecting each of the connectors 104, 106 to a corresponding one of the filter cartridges 40, 40₁.
The mixer tap 70 is shown in fig. 4 mounted to countertop designated the reference numeral 108.

The plumbing fixture 10" is assembled similarly to the plumbing fixture 10' by insertion of the respective filter cartridges 40 and 40₁ into the hollow interior channels 32 and 32₁ of the modified handle parts 14" and 14"₁, and by connection of the connectors 104 and 106 to the inlet connectors 44 and 44₁.
As seen in fig. 4, the plumbing fixture 10" cannot be used without the filter cartridges 40 and 40₁, thus increasing the security for the user of the plumbing fixture 10".
The modified handle parts 14" and 14"₁ are made from moulded plastic or metal. The connection lines 90 and 90₁ are made from plastic, metal piping or tubing, or rubber. The tap 80 is made from metal.

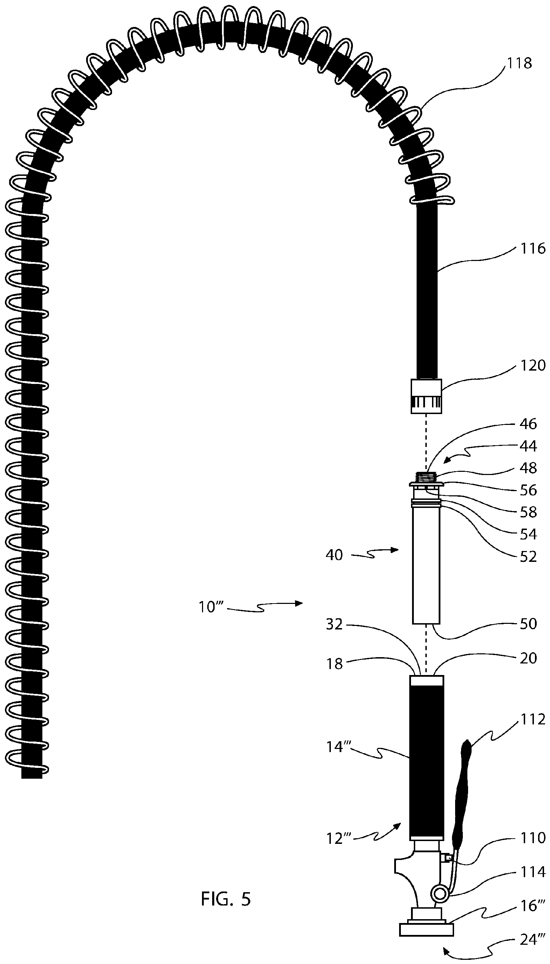

Fig. 5 shows, in a side and exploded view, a fourth embodiment of a plumbing fixture designated the reference numeral 10'" according to the first aspect of the present invention. The plumbing fixture 10'" differs from the plumbing fixture 10 in that the handheld shower head 12 has been substituted by a pre-rinse spray unit designated the reference numeral 12'" comprising a modified handle part 14'" having a valve, designated the reference numeral 110, for allowing the user to selectively discharge water through the modified water outlet 24'" by actuating a lever designated the reference numeral 112, pivoting around a pivoting point designated the reference numeral 114. The pre-rinse spray unit may be connected to a hose designated the reference numeral 116, supported by a support spring designated the reference numeral 118, the hose further having a connector designated the reference numeral 120.

The plumbing fixture 10'" is assembled similar to the plumbing fixture 10' by inserting the filter cartridge 40 into the hollow interior channel 32 of the modified handle part 14"', and by connection of the connector 120 to the inlet connector 44.
The pre-rinse spray unit 12'" is made from metal. The lever is made from metal. The modified handle part 14'" is covered by insulating material. The modified head part 16'" is made from metal.

**List of parts with reference to the figures:**

| |
|---|
| 10. Plumbing fixture |
| 12. Handheld shower head |
| 14. Handle part |
| 16. Head part |
| 18. Connection part |
| 20. Open inlet |
| 22. Indicia receiving groove |
| 24. Water outlet |
| 26. Nozzle |
| 28. First groove |
| 30. Second groove |
| 32. Hollow interior channel |
| 40. Filter cartridge |
| 42. Second housing part |
| 44. Inlet connector |
| 46. Inlet |
| 48. Screw thread |
| 50. Second end |
| 52. First sealing ring |
| 54. Second sealing ring |
| 56. Flange |
| 58. Web |
| 60. Axial groove |
| 62. Grating |
| 70. Water pipe |
| 72. Wall |
| 74. Connector |
| 80. Mixer tap |
| 82. First lever |
| 84. Second lever |
| 86. Spout |
| 88. Spout outlet |
| 90. Connection line |
| 100. Hot water pipe |
| 102. Cold water pipe |
| 104. First connector |
| 106. Second connector |
| 108. Countertop |
| 110. Valve |
| 112. Lever |
| 114. Pivot point |
| 116. Hose |
| 118. Support spring |
| 120. Connector |

## Claims

1. A plumbing fixture (10,10^{I},10^{II},10^{III}) comprising:
a water delivery part (12,12^{I},12^{II},12^{III}) comprising a first housing part (14,16;14^{I},16^{I};14^{II},80;14^{III},16^{III}) having a water outlet (24,24^{I},88,24^{III}) and a hollow interior channel (32) communicating with said water outlet (24,24^{I},88,24^{III}) and defining an open inlet (20) opposite to said water outlet (24,24^{I},88,24^{III}), said first housing part (14,16;14^{I},16^{I};14^{II},80;14^{III},16^{III}) further having a first connector (28,30) at said open inlet (20),
a filter cartridge (40) comprising a second housing part (42) having a hollow and generally elongated and cylindrical shape, said second housing part (42) having a first end (44) and an opposite second end (50) and being positionable in an at least partial insertion in said hollow interior channel (32) through said open inlet (20) exposing said first end (44) outside said first housing part (14,16;14^{I},16^{I};14^{I},80;14^{III},16^{III}) and positioning said second end (50) in communication with said water outlet (24,24^{I},88,24^{III}), said first end (44) defining an inlet connector (48) connectable to a source of water through a plumbing fitting (74,104,106,120) and establishing communication from said source of water into said second housing part (42), said second housing part (42) further having a second connector (52,54), said filter cartridge (40) further comprising a capillary filter interposed and concealed within said second housing part (42) between said first end (44) and said second end (50), and
said second connector (52,54) being engageable and lockable with said first connector (28,30) for retaining said second housing part (42) in said at least partial insertion, said first connector (28,30) being non-connectable to said plumbing fitting (74,104,106,120), and
the second housing part (42) is retained in the insertion within the hollow interior channel (32) by the engaging and locking of the sealing rings (52, 54) of said second connector with the respective first and second grooves (28, 30) of said first connector.

2. The plumbing fixture (10,10^{I},10^{II},10^{III}) according to claim 1, said plumbing fixture (10,10^{I},10^{II},10^{III}) being selected from the group comprising a handheld shower head, a wall mounted shower head, a pre-rinse spray unit, or a tap.

3. The plumbing fixture (10,10^{I},10^{II},10^{III}) according to any preceding claim, said capillary filter having a pore size of 0.2 µm or less.

4. The plumbing fixture (10,10^{I},10^{II},10^{III}) according to any preceding claim, said first connector (28,30) being provided within said hollow interior channel (32) and said second connector (52,54) being provided on said second housing part (42).

5. The plumbing fixture (10,10^{I},10^{II},10^{III}) according to any preceding claim, said first connector (28,30) comprising a first groove and said second connector (52,54) comprising a first sealing ring.

6. The plumbing fixture (10,10^{I},10^{II},10^{III}) according to claim 5, said first connector (28,30) further comprising a second groove and said second connector (52,54) further comprising a second sealing ring.

7. The plumbing fixture (10,10^{I},10^{II},10^{III}) according to any preceding claim, said at least partial insertion being established in a loose fit by said second housing part (42) in said hollow interior channel (32) of said first housing part (14,16;14^{I},16^{I};14^{II},80;14^{III},16^{III}).

8. The plumbing fixture (10,10^{I},10^{II},10^{III}) according to any preceding claim, said hollow interior channel (32) of said first housing part (14,16;14^{I},16^{I};14^{I},80;14^{III},16^{III}) having an inner cross section profile selected from the group comprising circular, semi-circular, triangular, square, hexagonal, polygonal, and star-shaped.

9. The plumbing fixture (10,10^{I},10^{II},10^{III}) according to any preceding claim, said hollow interior channel (32) comprising an inwardly projecting protrusion, said second housing part (42) comprising a groove, and said groove being enterable by said protrusion.

10. The plumbing fixture (10,10^{I},10^{II},10^{III}) according to any preceding claim, said hollow interior channel (32) comprising an axial spear, said filter cartridge (40) comprising an axial bore, and said axial bore being adapted to receive said spear.

11. The plumbing fixture (10,10^{I}, 10^{II},10^{III}) according to any preceding claim,
said second connector (52,54) being positioned at said first end (44) of said second housing part (42) and said first connector (28,30) being positioned at said open inlet (20) of said first housing part (14,16;14^{I},16^{I};14^{II},80;14^{III},16^{III}) defining a first set of positions, and/or
said second connector (52,54) being positioned at said second end (50) of said second housing part (42) and said first connector (28,30) being positioned adjacent said water outlet (24,24^{I},88,24^{III}) of said first housing part (14,16;14^{I},16^{I};14^{II},80;14^{III},16^{III}) defining a second set of positions, and/or
said first and second connectors (52,54) being positioned in a third set of positions in intermediate positions in relation to said first and second sets of positions.

12. The plumbing fixture (10,10^{I},10^{II},10^{III}) according to any preceding claim, said first housing part (14,16;14^{I},16^{I};14^{II},80;14^{III},16^{III}) comprising a window into said hollow interior channel (32), said second housing part (42) comprising indicia identifying said filter, and said partial insertion being adapted to position said indicia in registration with said window.

13. A method of preventing the supply of water from a source of water from a plumbing fixture (10,10^{I}, 10^{II},10^{III}) without filtering bacteria from the water, the method comprising
providing a water delivery part (12,12^{I},12^{II},12^{III}) comprising a first housing part (14,16;14^{I},16^{I};14^{I},80;14^{III},16^{III}) having a water outlet (24,24^{I},88,24^{III}) and a hollow interior channel (32) communicating with said water outlet (24,24^{I},88,24^{III}) and defining an open inlet (20) opposite to said water outlet (24,24^{I},88,24^{III}), said first housing part (14,16;14^{I},16^{I};14^{II},80;14^{III},16^{III}) further having a first connector (28,30) at said open inlet (20),
providing a filter cartridge (40) comprising a second housing part (42) having a hollow and generally elongated and cylindrical shape, said second housing part (42) having a first end (44) and an opposite second end (50) and being positionable in an at least partial insertion in said hollow interior channel (32) through said open inlet (20) exposing said first end (44) outside said first housing part (14,16;14^{I},16^{I};14^{I},80;14^{III},16^{III}) and positioning said second end (50) in communication with said water outlet (24,24^{I},88,24^{III}), said first end (44) defining an inlet connector connectable to a source of water through a plumbing fitting (74,104,106,120) and establishing communication from said source of water into said second housing part (42), said second housing part (42) further having a second connector (52,54), said filter cartridge (40) further comprising a capillary filter interposed and concealed within said second housing part (42) between said first end (44) and said second end (50), said second end (50) of said second housing part (42) being sealed by a mesh element being integrally and non-disconnectably sealed to said second housing part (42), and said second connector (52,54) being engageable and lockable with said first connector (28,30) for retaining said second housing part (42) in said at least partial insertion, said first connector (28,30) being non-connectable to said plumbing fitting (74,104,106,120),
positioning said second housing part (42) in said at least partial insertion in said hollow interior channel (32) and positioning said second end (50) of said second housing part (42) in communication with said water outlet (24,24^{I},88,24^{III}),
engaging and locking said first connector (28,30) to said second connector (52,54) and retaining said second housing part (42) in said at least partial insertion, and
connecting said inlet connector to said source of water through said plumbing fitting (74,104,106,120) and establishing communication from said source of water into said second housing part (42), the second housing part (42) is retained in the insertion within the hollow interior channel (32) by the engaging and locking of the sealing rings (52, 54) of said second connector with the respective first and second grooves (28, 30) of said first connector.

## Patentansprüche

1. Sanitärvorrichtung (10,10^{I},10^{II},10^{III}) umfassend:
eine Wasserversorgungseinheit (12,12^{I},12^{II},12^{III}) umfassend ein erstes Gehäuseteil (14,16;14^{I},16^{I};14^{II},80;14^{III},16^{III}) mit einem Wasserauslass (24,24^{I},88,24^{III}) und einen hohlen Innenkanal (32), der mit dem Wasserauslass (24,24^{I},88,24^{III}) in Verbindung steht und einen offenen Einlass (20) gegenüber dem Wasserauslass (24,24^{I},88,24^{III}) absteckt, wobei das erste Gehäuseteil (14,16;14^{I},16^{I};14^{II},80;14^{III},16^{III}) ferner einen ersten Anschluss (28,30) am offenen Einlass (20) aufweist,
einen Filtereinsatz (40) umfassend ein zweites Gehäuseteil (42), das hohl und hauptsächlich länglich und zylindrisch gestaltet ist, wobei das zweite Gehäuseteil (42) ein erstes Ende (44) und ein gegenüberliegendes zweites Ende (50) aufweist und in einer wenigstens teilweisen Einfügung im hohlen Innenkanal (32) durch den offenen Einlass (20) positionierbar ist, wobei das erste Ende (44) ausserhalb des ersten Gehäuseteils (14,16;14^{I},16^{I};14^{II},80;14^{III},16^{III}) freigelegt wird und das zweite Endes (50) so positioniert wird, dass es in Verbindung mit dem Wasserauslass (24,24^{I},88,24^{III}) steht, wobei das erste Ende (44) einen Einlassanschluss (48) absteckt, der an eine Wasserquelle durch ein Sanitärarmatur (74,104,106,120) anschliessbar ist, und Errichten einer Verbindung von der Wasserquelle in das zweite Gehäuseteil (42), wobei das zweite Gehäuseteil (42) ferner einen zweiten Anschluss (52,54) aufweist, wobei der Filtereinsatz (40) ferner einen Kapillarfilter umfasst, der eingeschoben und verdeckt im zweiten Gehäuseteil (42) zwischen dem ersten Ende (44) und dem zweiten Ende (50) ist, und
wobei der zweite Anschluss (52,54) mit dem ersten Anschluss (28,30) kuppelbar und schliessbar ist für das Festhalten des zweiten Gehäuseteils (42) in der wenigstens teilweisen Einfügung, wobei der erste Anschluss (28,30) nicht-anschliessbar an das Sanitärarmatur (74,104,106,120) ist, und
wobei das zweite Gehäuseteil (42) in der Einfügung im hohlen Innenkanal (32) durch das Kuppeln und Verriegeln der Dichtungsringe (52, 54) des zweiten Anschlusses festgehalten wird durch die jeweiligen ersten und zweiten Rillen (28, 30) des ersten Anschlusses.

2. Sanitärvorrichtung (10,10^{I},10^{II},10^{III}) nach Anspruch 1, wobei die Sanitärvorrichtung (10,10^{I},10^{II},10^{III}) aus der Gruppe bestehend aus einem Handheld-Brausekopf, einem Wandbrausekopf, einer Geschirrspülbrause, oder einem Hahn gewählt ist.

3. Sanitärvorrichtung (10,10^{I}, 10^{II},10^{III}) nach einem jeglichen der vorherstehenden Ansprüche, wobei der Kapillarfilter eine Porengrösse von 0,2 µm oder weniger aufweist.

4. Sanitärvorrichtung (10,10^{I}, 10^{II},10^{III}) nach einem jeglichen der vorherstehenden Ansprüche, wobei der erste Anschluss (28,30) im hohlen Innenkanal (32) bereitgestellt ist und der zweite Anschluss (52,54) auf dem zweiten Gehäuseteil (42) bereitgestellt ist.

5. Sanitärvorrichtung (10,10^{I}, 10^{II},10^{III}) nach einem jeglichen der vorherstehenden Ansprüche, wobei der erste Anschluss (28,30) eine erste Rille umfasst und der zweite Anschluss (52,54) einen ersten Dichtungsring umfasst.

6. Sanitärvorrichtung (10,10^{I},10^{II},10^{III}) nach Anspruch 5, wobei der erste Anschluss (28,30) ferner eine zweite Rille umfasst und der zweite Anschluss (52,54) ferner einen zweiten Dichtungsring umfasst.

7. Sanitärvorrichtung (10,10^{I}, 10^{II},10^{III}) nach einem jeglichen der vorherstehenden Ansprüche, wobei die wenigstens teilweise Einfügung in einer Spielpassung bereitgestellt wird durch das zweite Gehäuseteil (42) im hohlen Innenkanal (32) des ersten Gehäuseteils (14,16;14^{I},16^{I};14^{II},80;14^{III},16^{III}).

8. Sanitärvorrichtung (10,10^{I},10^{II},10^{III}) nach einem jeglichen der vorherstehenden Ansprüche, wobei der hohle Innenkanal (32) des ersten Gehäuseteils (14,16;14^{I},16^{I};14^{II},80;14^{III},16^{III}) ein inneres Querschnittsprofil aufweist, das aus der Gruppe bestehend aus kreisförmig, halbkreisförmig, dreieckig, viereckig, sechseckig, vieleckig und sternförmig gewählt ist.

9. Sanitärvorrichtung (10,10^{I},10^{II},10^{III}) nach einem jeglichen der vorherstehenden Ansprüche, wobei der hohle Innenkanal (32) eine nach innen hervorspringende Ausbuchtung umfasst, wobei das zweite Gehäuseteil (42) eine Rille umfasst, die die Ausbuchtung aufnehmen kann.

10. Sanitärvorrichtung (10,10^{I},10^{II},10^{III}) nach einem jeglichen der vorherstehenden Ansprüche, wobei der hohle Innenkanal (32) einen Axialspeer umfasst, wobei der Filtereinsatz (40) eine Axialbohrung umfasst, und wobei die Axialbohrung so angepasst ist, dass sie den Speer aufnehmen kann.

11. Sanitärvorrichtung (10,10^{I},10^{II},10^{III}) nach einem jeglichen der vorherstehenden Ansprüche,
wobei der zweite Anschluss (52,54) am ersten Ende (44) des zweiten Gehäuseteils (42) verortet ist und der erste Anschluss (28,30) am offenen Einlass (20) des ersten Gehäuseteils (14,16;14^{I},16^{I};14^{II},80;14^{III},16^{III}) verortet ist und einen ersten Satz von Positionen festlegt, und/oder
wobei der zweite Anschluss (52,54) am zweiten Ende (50) des zweiten Gehäuseteils (42) verortet ist und der erste Anschluss (28,30) angrenzend an dem Wasserauslass (24,24^{I},88,24^{III} des ersten Gehäuseteils (14,16;14^{I},16^{I};14^{II},80;14^{III},16^{III}) verortet ist und einen zweiten Satz von Positionen festlegt, und/oder
wobei der erste und zweite Anschluss (52,54) in einem dritten Satz von Positionen verortet sind, der in zwischenliegenden Positionen sind im Vergleich zu den ersten und zweiten Satz von Positionen.

12. Sanitärvorrichtung (10,10^{I},10^{II},10^{III}) nach einem jeglichen der vorherstehenden Ansprüche, wobei das erste Gehäuseteil (14,16;14^{I},16^{I};14^{II},80;14^{III},16^{III}) eine Sichtscheibe in den hohlen Innenkanal (32) umfasst, wobei das zweite Gehäuseteil (42) Zeichen umfasst für die Identifizierung des Filters, und wobei die teilweise Einfügung so angepasst ist, dass das Zeichen in Verbindung mit der Sichtscheibe verortet wird.

13. Verfahren zur Verhinderung von Wasserversorgung durch eine Wasserquelle eines Sanitärvorrichtungs (10,10^{I}, 10^{II},10^{III}) ohne Filterung des Wassers, wobei das Verfahren umfasst
Bereitstellen einer Wasserversorgungseinheit (12,12^{I},12^{II},12^{III}) umfassend ein erstes Gehäuseteil (14,16;14^{I},16^{I};14^{II},80;14^{III},16^{III}) mit einem Wasserauslass (24,24^{I},88,24^{III}) und einen hohlen Innenkanal (32), der mit dem Wasserauslass (24,24^{I},88,24^{III}) in Verbindungs steht und einen offenen Einlass (20) gegenüber des Wasserauslasses (24,24^{I},88,24^{III}) absteckt, wobei das erste Gehäuseteil (14,16;14^{I},16^{I};14^{II},80;14^{III},16^{III}) ferner einen ersten Anschluss (28,30) am offenen Einlass (20) aufweist,
Bereitstellen eines Filtereinsatzes (40) umfassend ein zweites Gehäuseteil (42), das hohl und hauptsächlich länglich und zylindrisch gestaltet ist, wobei das zweite Gehäuseteil (42) ein erstes Ende (44) und ein gegenüberliegendes zweites Ende (50) aufweist und in einer wenigstens teilweisen Einfügung im hohlen Innenkanal (32) durch den offenen Einlass (20) positionierbar ist, wobei das erste Ende (44) ausserhalb des ersten Gehäuseteils (14,16;14^{I},16^{I};14^{II},80;14^{III},16^{III}) freigelegt wird und das zweite Ende (50) so positionieren, dass es in Verbindung mit dem Wasserauslass (24,24^{I},88,24^{III}) steht, wobei das erste Ende (44) einen Einlassanschluss (48) absteckt, der an eine Wasserquelle durch ein Sanitärarmatur (74,104,106,120) anschliessbar ist, und Errichten einer Verbindung von der Wasserquelle in das zweite Gehäuseteil (42), wobei das zweite Gehäuseteil (42) ferner einen zweiten Anschluss (52,54) aufweist, wobei der Filtereinsatz (40) ferner einen Kapillarfilter umfasst, der eingeschoben und verdeckt im zweiten Gehäuseteil (42) zwischen dem ersten Ende (44) und dem zweiten Ende (50) ist, wobei das zweite Ende (50) des zweiten Gehäuseteils (42) durch ein am zweiten Gehäuseteil (42) angegossenes und nicht-abkuppelbar versiegeltes Netzelement versiegelt ist, und wobei der zweite Anschluss (52,54) kuppelbar und schliessbar mit dem ersten Anschluss (28,30) ist für das Festhalten des zweiten Gehäuseteils (42) in der wenigstens teilweisen Einfügung, wobei der erste Anschluss (28,30) nicht-anschliessbar zum Sanitärarmatur (74,104,106,120) ist,
Positionierung des zweiten Gehäuseteils (42) in der wenigstens teilweisen Einfügung im hohlen Innenkanal (32) und Positionierung des zweiten Endes (50) des zweiten Gehäuseteils (42) so dass es in Verbindung mit dem Wasserauslass (24,24^{I},88,24^{III}) steht,
Kupplung und Verriegeln des ersten Anschlusses (28,30) zum zweiten Anschluss (52,54) und Festhalten des zweiten Gehäuseteils (42) in der wenigstens teilweisen Einfügung, und
Verbinden des Einlassanschlusses zur Wasserquelle durch das Sanitärarmatur (74,104,106,120) und Versorgung von einer Verbindung von der Wasserquelle in das zweite Gehäuseteil (42), wobei das zweite Gehäuseteil (42) in der Einfügung im hohlen Innenkanal (32) festgehalten wird durch das Kuppeln und Verriegeln der Dichtungsringe (52, 54) des zweiten Anschlusses mit den jeweiligen ersten und zweiten Rillen (28, 30) des ersten Anschlusses.

## Revendications

1. Accessoire de plomberie (10,10^{I}, 10^{II},10^{III}) comprenant:
une partie de distribution d'eau (12,12^{I},12^{II},12^{III}) comprenant une première partie de boîtier (14,16;14^{I},16^{I};14^{II},80;14^{III},16^{III}) ayant une sortie d'eau (24,24^{I},88,24^{III}) et un canal creux intérieur (32) communiquant avec ladite sortie d'eau (24,24^{I},88,24^{III}) et définissant une entree ouverte (20) à l'opposée de ladite sortie d'eau (24,24^{I},88,24^{III}), ladite première partie de boîtier (14,16;14^{I},16^{I};14^{II},80;14^{III},16^{III}) ayant en outre un premier raccord (28, 30) à ladite entrée ouverte (20),
une cartouche de filtration (40) comprenant une deuxième partie de boîtier (42) ayant une forme creuse et généralement allongée et cylindrique, ladite deuxième partie de boîtier (42) ayant une première extrémité (44) et une deuxième extrémité opposée (50) et étant positionnable dans une insertion au moins partielle dans ledit canal creux intérieur (32) à travers ladite entrée ouverte (20) exposant ladite première extrémité (44) en dehors de ladite première partie de boîtier (14,16;14^{I},16^{I};14^{I},80;14^{III},16^{III}) et positionnant ladite deuxième extrémité (50) en communication avec ladite sortie d'eau (24,24^{I},88,24^{III}), ladite première extrémité (44) définissant un raccord d'entrée (48) qui peut être raccordé à une source d'eau par une installation de plomberie (74,104,106,120) et établissant une communication à partir de ladite source d'eau jusque dans ladite deuxième partie de boîtier (42), ladite deuxième partie de boîtier (42) ayant en outre un deuxième raccord (52,54), ladite cartouche de filtration (40) comprenant en outre un filtre capillaire interposé et dissimulé à l'intérieur de ladite deuxième partie de boîtier (42) entre ladite première extrémité (44) et ladite deuxième extrémité (50), et
ledit deuxième raccord (52,54) étant enclenchable et verrouillable avec ledit premier raccord (28,30) afin de retenir ladite deuxième partie eu boîtier (42) dans ladite insertion au moins partielle, ledit premier raccord (28,30) étant non-raccordable avec ladite installation de plomberie (74,104,106,120), et
ladite deuxième partie de boîtier (42) étant retenue dans l'insertion à l'intérieur dudit canal creux intérieur (32) par l'enclenchement et le verrouillement des bagues d'étanchéité (52,54) dudit deuxième raccord avec les première et deuxième rainures respectives (28,30) dudit premier raccord.

2. Accessoire de plomberie (10,10^{I},10^{II},10^{III}) selon la revendication 1, ledit accessoire de plomberie (10,10^{I},10^{II},10^{III}) étant sélectionné à partir du groupe comprenant une pomme de douche avec poignée, une pomme de douche montée au mur, une unité de vaporisation pré-rinçage, ou un robinet.

3. Accessoire de plomberie (10,10^{I},10^{II},10^{III}) selon l'une quelconque des revendications précédentes, ledit filtre capillaire ayant une taille de pore de 0,2 µm ou moins.

4. Accessoire de plomberie (10,10^{I},10^{II},10^{III}) selon l'une quelconque des revendications précédentes, ledit premier raccord (28,30) étant fourni à l'intérieur dudit canal creux intérieur (32), et ledit deuxième raccord (52,54) étant fourni sur ladite deuxième partie de boîtier (42).

5. Accessoire de plomberie (10,10^{I},10^{II},10^{III}) selon l'une quelconque des revendications précédentes, ledit premier raccord (28,30) comprenant une première rainure et ledit deuxième raccord (52,54) comprenant une première bague d'étanchéité.

6. Accessoire de plomberie (10,10^{I},10^{II},10^{III}) selon la revendication 5, ledit premier raccord (28,30) comprenant en outre une deuxième rainure et ledit deuxième raccord (52,54) comprenant une deuxième bague d'étanchéité.

7. Accessoire de plomberie (10,10^{I},10^{II},10^{III}) selon l'une quelconque des revendications précédentes, ladite insertion au moins partielle étant établie en ajustement libre par ladite deuxième partie de boîtier (42) dans ledit canal creux intérieur (32) de ladite première partie de boîtier (14,16;14^{I},16^{I};14^{II},80;14^{III},16^{III}).

8. Accessoire de plomberie (10,10^{I},10^{II},10^{III}) selon l'une quelconque des revendications précédentes, ledit canal creux intérieur (32) de ladite première partie de boîtier (14,16;14^{I},16^{I};14^{I},80;14^{III},16^{III}) ayant un profil de coupe transversale interne sélectionné du groupe comprenant des formes soit circulaire, semi-circulaire, triangulaire, carrée, hexagonale, polygonale, et en forme d'étoile.

9. Accessoire de plomberie (10,10^{I},10^{II},10^{III}) selon l'une quelconque des revendications précédentes, ledit canal creux intérieur (32) comprenant une saillie à projection vers l'intérieur, ladite deuxième partie de boîtier (42) comprenant une rainure, et ladite rainure étant saisissable par ladite saillie.

10. Accessoire de plomberie (10,10^{I},10^{II},10^{III}) selon l'une quelconque des revendications précédentes, ledit canal creux intérieur (32) comprenant une pique axiale, ladite cartouche de filtration (40) comprenant un perçage axial, et ledit perçage axial étant adapté pour recevoir ladite pique.

11. Accessoire de plomberie (10,10^{I},10^{II},10^{III}) selon l'une quelconque des revendications précédentes,
ledit deuxième raccord (52,54) étant positionné à ladite première extrémité (44) de ladite deuxième partie de boîtier (42), et ledit premier raccord (28,30) étant positionné à ladite entrée ouverte (20) de ladite première partie de boîtier (14,16;14^{I},16^{I};14^{I},80;14^{III},16^{III}) définissant un premier ensemble de positions, et/ou
ledit deuxième raccord (52,54) étant positionné à ladite deuxième extrémité (50) de ladite deuxième partie de boîtier (42), et ledit premier raccord (28,30) étant positionné adjacent ladite sortie d'eau (24,24^{I},88,24^{III}) de ladite première partie de boîtier (14,16;14^{I},16^{I};14^{II},80;14^{III},16^{III}) définissant un deuxième ensemble de positions, et/ou
lesdits premier et deuxième raccords (52,54) étant positionnés dans un troisième ensemble de positions dans des positions intermédiaires par rapport auxdits premier et deuxième ensemble de positions.

12. Accessoire de plomberie (10,10^{I},10^{II},10^{III}) selon l'une quelconque des revendications précédentes, ladite première partie de boîtier (14,16;14^{I},16^{I};14^{II},80;14^{III},16^{III}) comprenant une fenêtre au-dedans ledit canal creux intérieur (32), ladite deuxième partie de boîtier (42) comprenant des indices identifiant ledit filtre, et ladite insertion partielle étant adaptée pour positionner lesdites indices en correspondance avec ladite fenêtre.

13. Procédé pour empêcher l'approvisionnement en eau venant d'une source d'eau d'un accessoire de plomberie (10,10^{I}, 10^{II},10^{III}) sans qu'il y à une filtration des bactéries de l'eau, le procédé comprenant:
la fourniture d'une partie de distribution d'eau (12,12^{I},12^{II},12^{III}) comprenant une première partie de boîtier (14,16;14^{I},16^{I};14^{I},80;14^{III},16^{III}) ayant une sortie d'eau (24,24^{I},88,24^{III}) et un canal creux intérieur (32) communiquant avec ladite sortie d'eau (24,24^{I},88,24^{III}) et définissant une entree ouverte (20) à l'opposée de ladite sortie d'eau (24,24^{I},88,24^{III}), ladite première partie de boîtier (14,16;14^{I},16^{I};14^{I},80;14^{III},16^{III}) ayant en outre un premier raccord (28, 30) à ladite entrée ouverte (20),
la fourniture d'une cartouche de filtration (40) comprenant une deuxième partie de boîtier (42) ayant une forme creuse et généralement allongée et cylindrique, ladite deuxième partie de boîtier (42) ayant une première extrémité (44) et une deuxième extrémité opposée (50) et étant positionnable dans une insertion au moins partielle dans ledit canal creux intérieur (32) à travers ladite entrée ouverte (20) exposant ladite première extrémité (44) en dehors de ladite première partie de boîtier (14,16;14^{I},16^{I};14^{I},80;14^{III},16^{III}) et positionnant ladite deuxième extrémité (50) en communication avec ladite sortie d'eau (24,24^{I},88,24^{III}), ladite première extrémité (44) définissant un raccord d'entrée (48) qui peut être raccordé à une source d'eau par une installation de plomberie (74,104,106,120) et établissant une communication à partir de ladite source d'eau jusque dans ladite deuxième partie de boîtier (42), ladite deuxième partie de boîtier (42) ayant en outre un deuxième raccord (52,54), ladite cartouche de filtration (40) comprenant en outre un filtre capillaire interposé et dissimulé à l'intérieur de ladite deuxième partie de boîtier (42) entre ladite première extrémité (44) et ladite deuxième extrémité (50), ladite deuxième extrémité (50) de ladite deuxième partie de boîtier (42) étant étanchéifiée par des mailles étant complètement et non-déraccordablement étanchéifiées à ladite deuxième partie de boîtier (42), et ledit deuxième raccord (52,54) étant enclenchable et verrouillable avec ledit premier raccord (28,30) afin de retenir ladite deuxième partie de boîtier (42) dans ladite insertion au moins partielle, ledit premier raccord (28,30) étant non-raccordable avec ladite installation de plomberie (74,104,106,120),
le positionnement de ladite deuxième partie de boîtier (42) dans ladite au moins partielle insertion dans ledit canal creux intérieur (32) et le positionnement de ladite deuxième extrémtié (50) de ladite deuxième partie de boîtier (42) en communication avec ladite sortie d'eau (24,24^{I},88,24^{III}),
l'enclenchement et le vérouillement dudit premier raccord (28,30) audit deuxième raccord (52,54) et la rétention de ladite deuxième partie de boîtier (42) dans ladite au moins insertion partielle, et
le raccordement dudit raccord d'entrée à ladite source d'eau à travers ladite installation de plomberie (74,104,106,120) et l'établissement d'une communication de ladite source d'eau au-dedans de ladite deuxième partie de boîtier (42), ladite deuxième partie de boîtier (42) étant retenue dans l'insertion à l'intérieur dudit canal creux intérieur (32) par l'enclenchement et le vérouillement des bagues d'étanchéité (52,54) dudit deuxième raccord avec les première et deuxième rainures (28,30) dudit premier raccord.
